# EUROPÄISCHE PATENTSCHRIFT

(11) **EP 1 425 194 B1**
(45) Veröffentlichungstag und Bekanntmachung des Hinweises auf die Patenterteilung: **09.03.2005**
(21) Anmeldenummer: 02776664.1
(22) Anmeldetag: 10.09.2002
(51) Int. Cl.: B60H 1/34, B60H 1/00, F24F 13/15

(54) **LUFTLEITVORRICHTUNG**
AIR CONDUCTING DEVICE
DISPOSITIF D'ACHEMINEMENT D'AIR

(30) Priorität: 11.09.2001 DE 10144746
(43) Veröffentlichungstag der Anmeldung: 09.06.2004
(73) Patentinhaber: Utescheny AG, 75059 Zaisenhausen (DE)
(72) Erfinder: PESCH, Michael, 74235 Erlenbach (DE); HAMKE, Peter, 32584 Löhne (DE); BAUER, Thomas, 75031 Eppingen-Mühlbach (DE)
(74) Vertreter: Clemens, Gerhard, Dr.-Ing.
(86) Internationale Anmeldenummer: PCT/DE2002/003364
(87) Internationale Veröffentlichungsnummer: WO 2003/022611

(56) Entgegenhaltungen:
- EP-A- 1 059 178
- DE-A- 3 202 355
- FR-A- 2 585 637

## Beschreibung

### TECHNISCHES GEBIET

Die vorliegende Erfindung betrifft eine Luftleitvorrichtung zum richtungsmäßig definierten Einleiten von auf der Rückseite der Vorrichtung zugeführter Luft in einen Raum, insbesondere Innenraum eines Fahrzeugs, mit einem Gehäuse, einer vorderseitig Ausnehmungen aufweisenden Luftleiteinrichtung, mittels derer die Richtung der in den Raum ausströmenden Luft festlegbar ist, Mitteln zum Einstellen der Richtung der Luftleiteinrichtung und gegebenenfalls Mitteln zum Einstellen der Menge der in den Raum strömenden Luft, einem Luftleitkörper oder einer Luftleitplatte, der/die durchgehende Ausnehmungen aufweist, die mit den vorderseitigen Ausnehmungen und der luftbeaufschlagten Rückseite korrespondieren, wobei der Luftleitkörper oder die Luftleitplatte aus elastisch verformbarem Material besteht, Mitteln zum Verschieben der Rückseite des/der Luftleitkörpers/Luftleitplatte gegenüber der fixierten Vorderseite des/der Luftleitkörpers/Luftleitplatte vorhanden sind oder umgekehrt, wobei die Mittel zum Verschieben von den Mitteln zum Einstellen der Richtung beaufschlagt werden, so dass sich eine gewünschte Stellung der durchgehenden Ausnehmungen und damit die gewünschte Einströmrichtung einstellt, einer mit dem Luftleitkörper oder der Luftleitplatte verbundenen Verschiebeplatte mit Plattenausnehmungen, die mit den durchgehenden Ausnehmungen korrespondieren.

Derartige Luftleitvorrichtungen werden in großer Stückzahl im Innenraum von Kraftfahrzeugen zur Steuerung der Luftströmung (Richtung und Masse) eingesetzt.

### STAND DER TECHNIK

Es sind Luftleitvorrichtungen bekannt, die zur Steuerung der Luftströmungsrichtung sogenannte Lamellen- beziehungsweise Walzenausströmer besitzen. Hierbei werden sichtbare und schwenkbare Horizontal- und Vertikal-Lamellen über eine Mechanik unter manueller Betätigung nach "oben/unten" beziehungsweise nach "links/rechts" geschwenkt und somit die Luftströmung gesteuert. Die Menge der austretenden Luft wird hierbei manuell über ein Handrad eingestellt, das auf die Stellung einer im Zuführungskanal der Luft angeordneten schwenkbaren Klappe einwirkt. Durch diese "offene Bauweise" wird die Optik beziehungsweise das Design des Armaturenbretts eines Kraftfahrzeugs gestört. Die Luftleitvorrichtung wirkt wie ein Fremdkörper. Darüber hinaus neigen die Horizontal- und Vertikal-Lamellen zur Verschmutzung durch Staubansammlung in den Eckbereichen, die zu Reinigungszwecken nur schwer zugänglich sind.

Eine Luftleitvorrichtung der eingangs genannten Art ist aus FR 2585637 sowie EP 1 059 178 A2 bekannt. Dabei wird ein elastischer Luftleitkörper eingesetzt, der durchgehende Ausnehmungen aufweist, durch die die Luft hindurchströmt. Durch eine Relativbewegung der Vorderseite beziehungsweise Rückseite des Luftleitkörpers kann die Richtung der diffus ausströmenden Luft eingestellt werden.

### DARSTELLUNG DER ERFINDUNG

Der vorliegenden Erfindung liegt die Aufgabe beziehungsweise das technische Problem zugrunde, eine Luftleitvorrichtung der eingangs genannten Art anzugeben, die eine einfache und dauerhaft zuverlässige Einstellung der Luftströmungsrichtung gewährleistet, die eine wirtschaftliche Herstellung und Montage ermöglicht und gleichzeitig hohe Komfortbedingungen umsetzt.

Die erfindungsgemäße Luftleitvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Luftleitvorrichtung zeichnet sich demgemäß dadurch aus, dass die Verschiebeplatte an mindestens drei Punkten an beidseits kugelig gelagerten Hebeln am Gehäuse angeschlossen ist. Durch die kugelige Lagerung ist eine Bewegung der Verschiebeplatte in sphärischen Dimensionen möglich, so dass die beim Einstellvorgang auf den Luftleitkörper wirkenden Verzerrungen hinsichtlich der hervorgerufenen Beanspruchung klein gehalten werden können. Insgesamt kommt es dadurch zu einer geringeren Beanspruchung des elastischen Luftleitkörpers, der beispielsweise aus Schaumstoff besteht, so dass dessen Lebensdauer deutliche erhöht wird.

Die erfindungsgemäße Luftleitvorrichtung zeichnet sich zusätzlich dadurch aus, dass die Mittel zum Verschieben einen ersten Verschiebemechanismus und einen zweiten Verschiebemechanismus aufweisen, die auf die Verschiebeplatte einwirken und mittels derer die räumliche Ausströmrichtung festlegbar ist. Dabei sind die Mittel zum Verschieben bevorzugt so ausgebildet, dass sie in der Lage sind, zwei senkrecht aufeinander stehende Verschieberichtungen umzusetzen, um damit die Einstellung eines hinsichtlich der konstruktiv vorgegebenen Grenzen der Ausströmrichtung beliebigen Raumwinkels der ausströmenden Luft zu gewährleisten.

Eine konstruktiv besonders einfache und damit wirtschaftlich herstellbare und montierbare Ausgestaltung zeichnet sich dadurch aus, dass der erste und zweite Verschiebemechanismus jeweils eine drehbar antreibbare Welle aufweisen, an die jeweils ein exzentrisch angeschlossenes Hebelelement beziehungsweise ein exzentrisch angeschlossenes Hebelelementenpaar oder umgekehrt angelenkt ist, das die Drehbewegung der jeweiligen Welle in die entsprechende translatorische Verschiebung der Verschiebeplatte umsetzt.

Eine besonders bevorzugte Weiterbildung zeichnet sich dadurch aus, dass die Mittel zum Einstellen der Richtung antreibbare Wellen aufweisen, die ihre aufgrund der jeweilig vorgenommenen Einstellung sich ergebende Drehbewegung mittels Zahnriemen und gegebenenfalls mittels weiterer zwischengeschalteter Wellen und Zahnriemen auf die entsprechende drehbare Welle übertragen. Dadurch, dass zwischen den drehbaren Wellen und den antreibbaren Wellen Zahnriemen eingesetzt werden, ist es problemlos möglich, die Mittel zum Einstellen unabhängig von der Position der Luftleitvorrichtung anzuordnen. Dadurch ergibt sich eine Vielzahl von Gestaltungsmöglichkeiten zur Bedienung der Luftleitvorrichtung. So kann die Einstellung entweder direkt im unmittelbaren Bereich der Luftleitvorrichtung vorgenommen werden. Andererseits ist es möglich, dass beispielsweise innerhalb eines Fahrzeuges von der Fahrerposition her die Einströmrichtung der Luft an jeder Position im Innenraum, beispielsweise auf der Beifahrerseite, einstellbar ist.

In einer bevorzugten Ausführungsvariante sind die Mittel zum Einstellen der Richtung der einströmenden Luft als in allen Richtungen drehbare Kugel (Trackball) ausgebildet, die manuell zu bedienen ist.

Eine alternative, besonders vorteilhafte Ausgestaltung zeichnet sich dadurch aus, dass elektrisch, hydraulisch oder pneumatisch betriebene Aggregate vorhanden sind, die entsprechend ansteuerbar sind und die die Richtung der durch die Luftleitvorrichtung einströmenden Luft nach vorgaben einer automatischen Steuereinheit oder nach manueller Vorgabe einstellen.

In einer bevorzugten Ausgestaltung weist der Luftleitkörper durchgehende Ausnehmungen auf, die zumindest bereichsweise parallel angeordnet sind. Es ist jedoch auch möglich, um ein diffuses Ausströmprofil zu erzeugen, durchgehende Ausnehmungen vorzusehen, die in einem definierten Winkel zueinander angeordnet sind.

Der Querschnitt der durchgehenden Ausnehmungen kann variabel gestaltet sein. Bevorzugt ist der Querschnitt rund, polygonal oder oval.

Besonders hohe designerische Ansprüche lassen sich damit umsetzen, dass gemäß einer bevorzugten Ausführungsvariante die Vorderseite des Luftleitkörpers dreidimensional ausgebildet ist, insbesondere eine sphärisch konvexe Wölbung aufweist. Es können jedoch auch beliebig andere dreidimensionale Strukturen umgesetzt werden, die den designerischen Ansprüchen im Bereich der Luftleitvorrichtung genügen.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Es zeigen:
- Fig. 1: schematische Perspektivdarstellung einer Luftleitvorrichtung von der rückseitigen Einströmrichtung der Luft her gesehen mit zwei Verschiebemechanismen, die von einem Trackball beaufschlagt werden,
- Fig. 2a, b: schematischer Längsschnitt durch eine Luftleitvorrichtung unter Darstellung der Verschiebebewegung des Luftleitkörpers durch den einen ersten Verschiebemechanismus,
- Fig. 3a, b: schematischer Längsschnitt durch eine Luftleitvorrichtung unter Darstellung der Verschiebebewegung des Luftleitkörpers durch den einen zweiten Verschiebemechanismus,
- Fig. 4: schematische Vorderansicht der Luftleitvorrichtung gemäß Fig. 1 und
- Fig. 5: schematischer Längsschnitt durch einen Luftleitkörper mit sphärischer Wölbung und durchgehenden Ausnehmungen mit unterschiedlicher Winkelanordnung zueinander.

### WEGE ZUM AUSFÜHREN DER ERFINDUNG

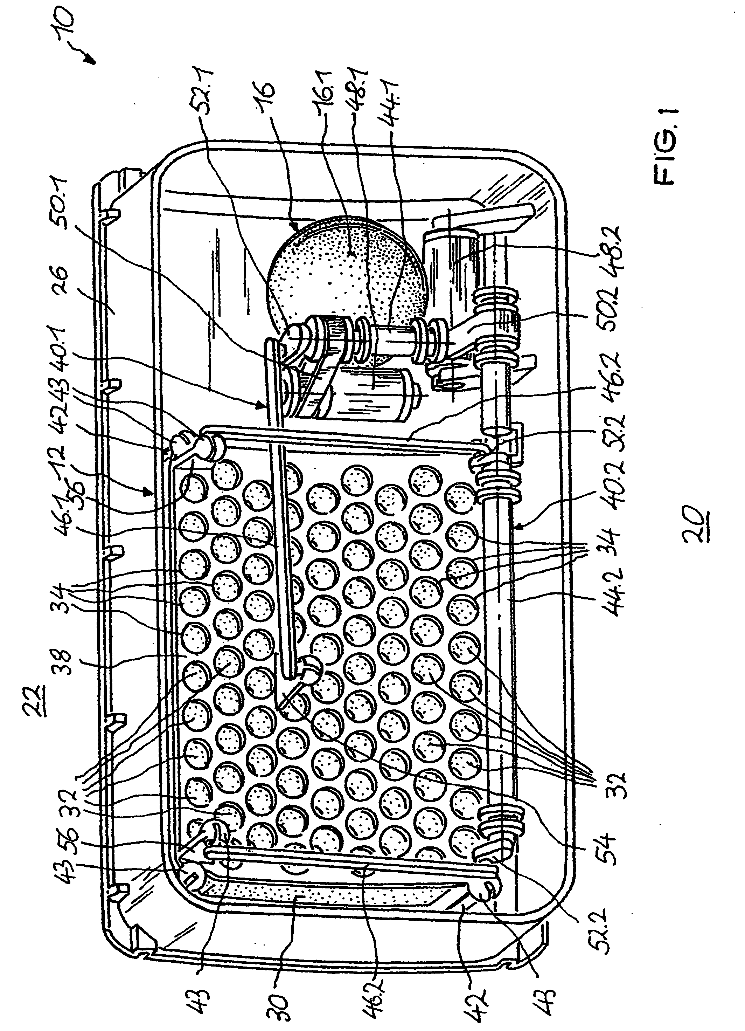

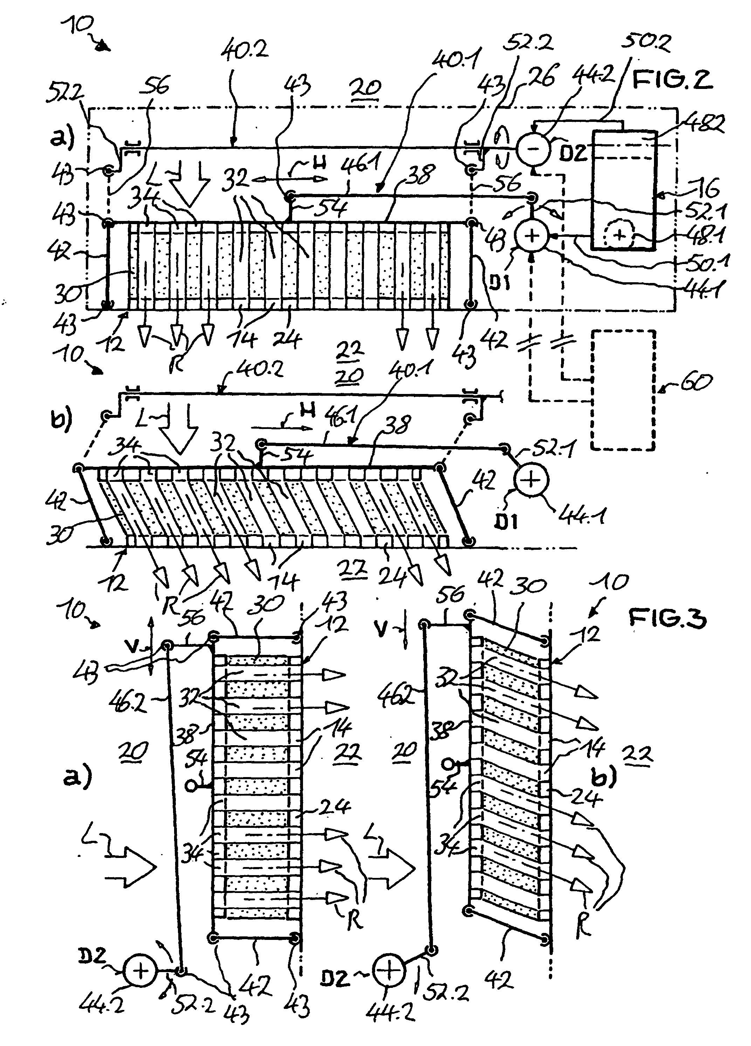

In Fig. 1 ist von der Rückseite her gesehen eine Luftleitvorrichtung 10 dargestellt, die ein Gehäuse 26 und eine innerhalb des Gehäuses 26 angeordnete, quaderförmige Luftleiteinrichtung 12 aufweist. Auf der Vorderseite weist die Luftleitvorrichtung 10 eine in Fig. 1 nicht sichtbare Lochblende 24 (Fig. 2) auf, die in einem vorgegebenen Raster Ausnehmungen 14 besitzt. Fest mit der Lochblende 24 ist die Luftleiteinrichtung 12 verbunden, die einen aus elastischem Material bestehenden Luftleitkörper 30 aufweist, der durchgehende Ausnehmungen 32 besitzt, die mit den Ausnehmungen 14 der Lochblende 24 korrespondieren. Der Luftleitkörper 30 kann beispielsweise aus Schaumstoff gebildet sein.

Auf der Rückseite des Luftleitkörpers 30, das heißt auf der dem Betrachter von Fig. 1 zugewandten Seite, ist an den Luftleitkörper 30 eine Verschiebeplatte 38 angeschlossen, die wiederum Plattenausnehmungen 34 aufweist, die mit den durchgehenden Ausnehmungen 32 des Luftleitkörpers 30 korrespondieren.

Die rechteckförmige Verschiebeplatte 38 ist in ihren vier Eckpunkten jeweils über einen Hebel 42 an das Gehäuse 26 angeschlossen, wobei sowohl der Anschluss des jeweiligen Hebels 42 an die Verschiebeplatte 38 als auch an das Gehäuse 26 als Kugelgelenk 43 ausgebildet ist.

Eine Verschiebung der Verschiebeplatte 38 bewirkt, dass sich die Rückseite des Luftleitkörpers 30 relativ zur Vorderseite verschiebt, wodurch die Richtung R der durch die Ausnehmungen 32 strömenden Luft L einstellbar ist.

Zum Verschieben der Verschiebeplatte 38 in horizontaler Richtung H und/oder in Vertikalrichtung V ist ein erster Verschiebemechanismus 40.1 und ein zweiter Verschiebemechanismus 40.2 vorhanden. Allgemein kann man diese Verschiebemechanismen als Mittel zum Verschieben bezeichnen. Auf diese Mittel zum Verschieben der Verschiebeplatte 38 wirken Mittel 16 zum Einstellen der Verschiebung ein, die in Fig. 1 als sogenannter Trackball 16.1 ausgebildet sind.

Zur Einstellung der Richtung R muss eine Bedienperson den Trackball 16.1 entsprechend drehen. Durch die Drehung des kugelförmigen Trackballs 16.1 wird eine erste Antriebswelle 48.1 und eine zweite Antriebswelle 48.2 in Drehung versetzt, wobei die Drehachsen beider Wellen senkrecht zueinander stehen. Die Drehbewegung der ersten Antriebswelle 48.1 wird über einen ersten Zahnriemen 50.1 auf eine erste drehbare Welle 44.1 übertragen, deren Drehachse parallel zur Drehachse der ersten Antriebswelle 48.1 verläuft. An die erste drehbare Welle 44.1 ist eine erste Vorsprungeinheit 52.1 angeschlossen, an deren freien Endbereich ein erstes Hebelelement 46.1 mit seinem einen Ende gelenkig angeschlossen ist. Mit dem anderen Ende ist das erste Hebelelement 46.1 an eine weitere Vorsprungeinheit 54 angelenkt, die mit der Verschiebeplatte 38 fest verbunden ist. Aufgrund des exzentrischen Anschlusses des ersten Hebelelementes 46.1 wird die Drehbewegung der ersten drehbaren Welle 44.1 in eine Horizontalbewegung H umgesetzt.

Die Umsetzung der Verschiebung der Verschiebeplatte 38 in vertikaler Richtung V geschieht über eine zweite Antriebswelle 48.2, die bei Drehung des Trackballs 16.1 um eine horizontale Achse in Drehung versetzt wird. Über einen zweiten Zahnriemen 50.2 wird diese Drehbewegung auf eine zweite drehbare Welle 44.2 übertragen. Die zweite drehbare Welle 44.2 verläuft am unteren Rand des Luftleitkörpers 30 entlang bis zu dessen in Fig. 1 linken Randbereich. An die zweite drehbare Welle 44.2 sind zwei zweite Vorsprungeinheiten 52.2 angeschlossen auf Höhe des linken und rechten Randbereiches der Verschiebeplatte 38. An den freien Endbereich dieser zwei zweiten Vorsprungeinheiten 52.2 ist jeweils ein zweites Hebelelement 46.2 mit seinem einen Ende gelenkig angeschlossen und mit seinem anderen Ende an weitere Vorsprungeinheiten 56 gelenkig angeschlossen, die wiederum fest mit der Verschiebeplatte 38 verbunden ist. Durch diesen zweiten Verschiebemechanismus 40.2 wird die Drehbewegung der zweiten drehbaren Welle 44.2 aufgrund der parallelen Führung durch die zwei zweiten Hebelelemente 46.2 in eine Vertikalverschiebung V der Verschiebeplatte 38 umgesetzt.

Aus Übersichtlichkeitsgründen ist in Fig. 1 die Lagerung der Wellen 44.1, 44.2 und 48.1, 48.2 innerhalb des Gehäuses 26 nicht näher dargestellt.

In Fig. 2 ist schematisch der Verschiebevorgang in horizontaler Richtung dargestellt. Aufgrund der Mittel 16 zum Einstellen der Richtung wird die erste drehbare Welle 44.1 in Drehung versetzt, wobei gemäß der Darstellung in Fig. 2a und b die Drehachse der ersten drehbaren Welle 44.1 senkrecht auf der Blattebene steht. Dadurch verschiebt sich das über die Vorsprungeinheiten 52.1 und 54 angeschlossene Hebelelement 46.1 in Richtung H und damit auch die Rückseite der Verschiebeplatte 38, so dass sich das in Fig. 2b dargestellte Verschiebebild mit geneigter Richtung R der austretenden Luft L ergibt. Die Darstellung in Fig.2a und b entspricht im Wesentlichen einer Längsschnittdarstellung.

Die Darstellung in Fig. 3a und b entspricht im Wesentlichen einer Querschnittsdarstellung und verdeutlicht die Bewegung der Bauteile bei Verschiebung der Verschiebeplatte 38 in Richtung V. Wie bereits oben erläutert wird durch die Mittel 16 zum Einstellen der Richtung die drehbare Welle 44.2 in Drehung versetzt, wodurch sich das zweite Hebelelementenpaar 46.2, das exzentrisch über die Vorsprungeinheiten 52.2 und 56 angeschlossen ist, in Richtung V verschiebt. Dadurch verschiebt sich auch die Verschiebeplatte 38, die über die Vorsprungeinheit 56 angeschlossen ist, ebenfalls in vertikaler Richtung V, so dass es zu einer Neigung der R der austretenden Luft L gemäß Fig. 3b kommt.

Durch die Kombination der Verschieberichtungen H und V kann jede beliebige Richtung R - in den vorgegebenen konstruktiven Grenzen - eingestellt werden.

Die Rückseite, das heißt die Seite, von der die Luft L der Luftleitvorrichtung 10 zugeführt wird, ist in den Figuren mit dem Bezugszeichen 20 versehen. Der Raum, in den die Luft gemäß der Einstellung in Richtung R austritt, ist in den Figuren mit dem Bezugszeichen 22 versehen.

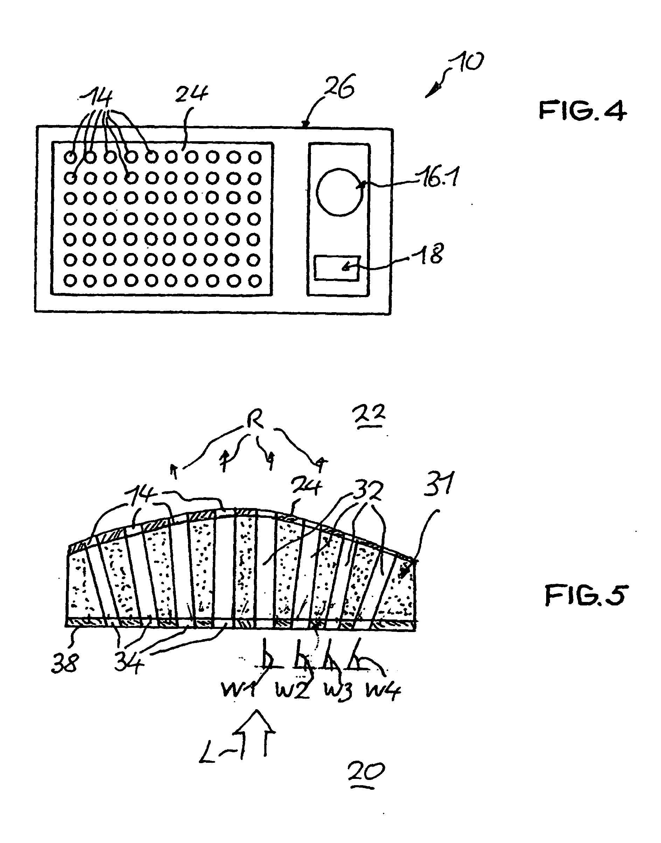

Fig. 4 zeigt schematisch die Luftleiteinrichtung 10 in einer Vorderansicht. Unterhalb des Trackballs 16.1 können Mittel 18 zum Einstellen der der Luftleitvorrichtung 10 zugeführten Luftmenge vorhanden sein.

In Fig. 5 ist schematisch in einem Längsschnitt eine Ausführungsform eines Luftleitkörpers 31 dargestellt, der außenseitig eine sphärische Wölbung besitzt und bei dem die durchgehenden Ausnehmungen 32 mit unterschiedlichen Winkeln W1, W2, W3, W4 zueinander angeordnet sind, das heißt die Richtung der durchgehenden Ausnehmungen 32 von der Mitte her nach außen zunehmend geneigt ausgebildet ist.

Grundsätzlich ist jede dreidimensionale Ausgestaltung des Luftleitkörpers 31 denkbar.

Die Ausnehmungen können - wie dargestellt - rund sein. Die Querschnittsform der Ausnehmungen 32 kann jedoch beliebig gewählt werden, wie beispielsweise polygonal, oval oder dergleichen.

In Fig. 2a sind schematisch in strichpunktierter Art und Weise weitere Mittel 60 zum Einstellen der Richtung schematisch dargestellt. Diese können die Mittel 16 ersetzen. Da die Drehbewegung zum Verschieben der Verschiebeplatte 38 mittels Zahnriemen übertragen wird, können diese Mittel 60 zum Einstellen weiter entfernt von der Luftleitvorrichtung 10 vorhanden sein. Dadurch ist es beispielsweise für den Innenraum eines Fahrzeuges möglich, dass der Fahrer die Luftrichtung R sämtlicher im Fahrzeug befindlicher Luftleitvorrichtungen einstellen kann. Die Drehbewegung, die letztendlich die Verschiebebewegung H, V der Verschiebeplatte 38 bewirkt, kann auch mit einem ansteuerbaren Motorenaggregat erfolgen, das elektrisch, hydraulisch oder pneumatisch betrieben werden kann.

## Patentansprüche

1. Luftleitvorrichtung (10) zum richtungsmäßig definierten Einleiten (R) von auf der Rückseite (20) der Vorrichtung zugeführter Luft (L) in einen Raum (22), insbesondere Innenraum eines Fahrzeugs, mit
- einem Gehäuse (26), ,
- einer vorderseitig Ausnehmungen (14) aufweisenden Luftleiteinrichtung (12), mittels derer die Richtung (R) der in den Raum (22) ausströmenden Luft festlegbar ist,
- Mitteln (16) zum Einstellen der Richtung (R) der Luftleiteinrichtung (12) und gegebenenfalls Mitteln zum Einstellen der Menge der in den Raum strömenden Luft,
- einem Luftleitkörper (30) oder einer Luftleitplatte, der/die durchgehende Ausnehmungen (32) aufweist, die mit den vorderseitigen Ausnehmungen (14) und der luftbeaufschlagten Rückseite (20) korrespondieren, wobei
-- der Luftleitkörper (30) oder die Luftleitplatte aus elastisch verformbarem Material besteht,
- Mitteln (40.1, 40.2) zum Verschieben der Rückseite des/der Luftleitkörpers (30)/Luftleitplatte gegenüber der fixierten Vorderseite des/der Luftleitkörpers (30) /Luftleitplatte vorhanden sind oder umgekehrt, wobei
-- die Mittel (40.1, 40.2) zum Verschieben von den Mitteln (16) zum Einstellen der Richtung beaufschlagt werden, so dass sich eine gewünschte Stellung der durchgehenden Ausnehmungen (32) und damit die gewünschte Einströmrichtung (R) einstellt, und
- einer mit dem Luftleitkörper (30) oder der Luftleitplatte verbundenen Verschiebeplatte (38) mit Plattenausnehmungen (34), die mit den durchgehenden Ausnehmungen (32) korrespondieren, wobei
- die Mittel (40.1, 40.2) zum Verschieben einen ersten Verschiebemechanismus (40.1) und einen zweiten Verschiebemechanismus (40.2) aufweisen, die auf die Verschiebeplatte (38) einwirken und mittels derer die räumliche Ausströmrichtung (R) festlegbar ist,
**dadurch gekennzeichnet, dass**
- die Verschiebeplatte (38) an mindestens drei Punkten an beidseits kugelig gelagerten Hebeln (42) am Gehäuse (26) angeschlossen ist und
- an der Verschiebeplatte (38) Vorsprungeinheiten (54; 56) angeschlossen sind, an deren freiem Ende jeweils Hebelelemente (46.1; 46.2) des ersten beziehungsweise zweiten Verschiebemechanismus (40.1; 40.2) angelenkt sind.

2. Luftleitvorrichtung nach Anspruch 1,
**dadurch gekennzeichnet, dass**
- die Mittel (40.1, 40.2) zum Verschieben zwei senkrecht zueinanderstehende Verschieberichtungen (H, V) umsetzen.

3. Luftleitvorrichtung nach Anspruch 1 oder 2,
**dadurch gekennzeichnet, dass**
- der erste und zweite Verschiebemechanismus (40.1, 40.2) jeweils eine drehbar antreibbare Welle (44.1, 44.2) aufweisen, an die jeweils ein exzentrisch angeschlossenes Hebelelement (46.1) beziehungsweise ein exzentrisch angeschlossenes Hebelelementenpaar (46.2) oder umgekehrt angelenkt ist, das die Drehbewegung der jeweiligen Welle (44.1, 44.2) in die entsprechende translatorische Verschiebung (H, V) der Verschiebeplatte (38) umsetzt.

4. Luftleitvorrichtung nach Anspruch 3,
**dadurch gekennzeichnet, dass**
- die Mittel (16) zum Einstellen der Richtung (R) antreibbare Wellen (48.1, 48.2) aufweisen, die ihre aufgrund der jeweilig vorgenommenen Einstellung sich ergebende Drehbewegung mittels Zahnriemen (50.1, 50. 2) und gegebenenfalls mittels weiterer zwischengeschalteter Wellen und Zahnriemen auf die entsprechende drehbare Welle (44.1, 44.2) übertragen.

5. Luftleitvorrichtung nach Anspruch 4,
**dadurch gekennzeichnet, dass**
- die Mittel (16) zum Einstellen der Richtung einen Trackball (16.1) aufweisen.

6. Luftleitvorrichtung nach Anspruch 4,
**dadurch gekennzeichnet, dass**
- die Mittel zum Einstellen der Richtung zumindest ein elektrisch, hydraulisch oder pneumatisch betriebenes, ansteuerbares Aggregat aufweisen.

7. Luftleitvorrichtung nach einem oder mehreren der vorstehenden Ansprüche,
**dadurch gekennzeichnet, dass**
- die durchgehenden Ausnehmungen (32) zumindest bereichsweise parallel zueinander angeordnet sind.

8. Luftleitvorrichtung nach einem oder mehreren der vorstehenden Ansprüche,
**dadurch gekennzeichnet, dass**
- die durchgehenden Ausnehmungen zumindest bereichsweise in einem definierten Winkel (W1 bis W4) zueinander angeordnet sind.

9. Luftleitvorrichtung nach einem oder mehreren der vorstehenden Ansprüche,
**dadurch gekennzeichnet, dass**
- die durchgehenden Ausnehmungen einen runden, polygonalen oder ovalen Querschnitt aufweisen.

10. Luftleitvorrichtung nach einem oder mehreren der vorstehenden Ansprüche,
**dadurch gekennzeichnet, dass**
- die Vorderseite des Luftleitkörpers (31) dreidimensional ausgebildet ist, insbesondere eine sphärisch konvexe Wölbung aufweist.

11. Luftleitvorrichtung nach einem oder mehreren der vorstehenden Ansprüche,
**dadurch gekennzeichnet, dass**
- vorderseitig auf dem Luftleitkörper eine Lochblende (24) angeordnet ist.

12. Luftleitvorrichtung nach einem oder mehreren der vorstehenden Ansprüche,
**dadurch gekennzeichnet, dass**
- die Mittel (40.1, 40.2) zum Verschieben der Verschiebeplatte (38) von einer Klimaanlagensteuerung beaufschlagt werden.

13. Luftleitvorrichtung nach Anspruch 11
**dadurch gekennzeichnet, dass**
- die Lochblende aus hochwertigem Designmaterial besteht, insbesondere aus Aluminium, Edelstahl, Holz furniert, Leder bezogen oder Kevlar®.

## Claims

1. An air-guiding appliance (10) for the directionally defined introduction (R) of air (L) supplied on the rear side (20) of the appliance into a space (22), in particular interior of a vehicle, having
- a housing (26),
- an air-guiding device (12) which has recesses (14) on the front side and by means of which the direction (R) of the air flowing out into the space (22) can be defined,
- means (16) for setting the direction (R) of the air-guiding device (12) and, if appropriate, means for setting the quantity of air flowing into the space,
- an air-guiding body (30) or an air-guiding plate which has through-going recesses (32) which correspond with the front-side recesses (14) and the air-charged rear side (20),
-- the air-guiding body (30) or the air-guiding plate consisting of elastically deformable material,
- there being means (40.1, 40.2) for displacing the rear side of the air-guiding body (30)/air-guiding plate with respect to the fixed front side of the air-guiding body (30)/air-guiding plate, or vice versa,
-- the displacement means (40.1, 40.2) being acted upon by the means (16) for setting the direction, so that a desired position of the through-going recesses (32) and therefore the desired inflow direction (R) is set,
- and having a displacement plate (38) which is connected to the air-guiding body (30) or the air-guiding plate and has plate recesses (34) which correspond with the through-going recesses (32),
- the displacement means (40.1, 40.2) having a first displacement mechanism (40.1) and a second displacement mechanism (40.2) which act on the displacement plate (38) and by means of which the spatial outflow direction (R) can be defined,
**characterized in that**
- the displacement plate (38) is connected at at least three points to the housing (26) at levers (42) which are mounted on balls on both sides, and
- projection units (54, 56) are connected to the displacement plate (38) and lever elements (46.1; 46.2) of the first and second displacement mechanisms (40.1; 40.2) are coupled in each case to the free end of said projection units.

2. The air-guiding appliance as claimed in claim 1,
**characterized in that**
- the displacement means (40.1, 40.2) provide two displacement directions (H, V) which are perpendicular to each other.

3. The air-guiding appliance as claimed in claim 1 or 2,
**characterized in that**
- the first and second displacement mechanisms (40.1, 40.2) each have a rotatably drivable shaft (44.1, 44.2) to which is coupled in each case an eccentrically connected lever element (46.1) or an eccentrically connected pair of lever elements (46.2) or vice versa, which element or pair converts the rotational movement of the particular shaft (44.1, 44.2) into the corresponding translatory displacement (H, V) of the displacement plate (38).

4. The air-guiding appliance as claimed in claim 3,
**characterized in that**
- the means (16) for setting the direction (R) have drivable shafts (48.1, 48.2) which transfer their rotational movement, which arises on the basis of the setting undertaken in each case, to the corresponding, rotatable shaft (44.1, 44.2) by means of toothed belts (50.1, 50.2) and, if appropriate, by means of further, interconnected shafts and toothed belts.

5. The air-guiding appliance as claimed in claim 4,
**characterized in that**
- the means (16) for setting the direction have a track ball/drag ball (16.1).

6. The air-guiding appliance as claimed in claim 4,
**characterized in that**
- the means for setting the direction have at least one activatable assembly which is operated electrically, hydraulically or pneumatically.

7. The air-guiding appliance as claimed in one or more of the preceding claims,
**characterized in that**
- the through-going recesses (32) are arranged parallel to one another at least in some regions.

8. The air-guiding appliance as claimed in one or more of the preceding claims,
**characterized in that**
- the through-going recesses are arranged at least in some regions at a defined angle (W1 to W4) with respect to each other.

9. The air-guiding appliance as claimed in one or more of the preceding claims,
**characterized in that**
- the through-going recesses have a round, polygonal or oval cross section.

10. The air-guiding appliance as claimed in one or more of the preceding claims,
**characterized in that**
- the front side of the air-guiding body (31) is of three-dimensional design, in particular has a spherically convex curvature.

11. The air-guiding appliance as claimed in one or more of the preceding claims,
**characterized in that**
- a perforated screen (24) is arranged on the front side of the air-guiding body.

12. The air-guiding appliance as claimed in one or more of the preceding claims,
**characterized in that**
- the means (40.1, 40.2) for displacing the displacement plate (38) are acted upon by an air-conditioning-system controlling means.

13. The air-guiding appliance as claimed in claim 11,
**characterized in that**
- the performed screen consists of high-quality design material, in particular of aluminum, stainless steel or is wood veneered, leather-covered or of kevlar ®.

## Revendications

1. Dispositif d'acheminement d'air (10) pour faire pénétrer de l'air (L) arrivant par la face arrière (20) dudit dispositif, suivant une direction définie (R), dans un espace (22), notamment un habitacle d'un véhicule, comprenant :
- un boîtier (26),
- un dispositif pour guider l'air (12) présentant sur le devant des évidements (14), au moyen duquel il est possible de déterminer la direction (R) de l'air pénétrant dans l'espace (22),
- des moyens (16) pour régler la direction (R) du dispositif pour guider l'air (12) et éventuellement des moyens pour régler la quantité d'air pénétrant dans l'espace,
- un corps de guidage de l'air (30) ou une plaque de guidage de l'air qui présente des évidements (32) le (la) traversant de part en part qui coïncident avec les évidements (14) situés sur le devant et avec la face arrière (20) sollicitée par l'air, sachant que
- le corps de guidage de l'air (30) ou la plaque de guidage de l'air est constitué(e) d'une matière déformable élastiquement,
- des moyens (40.1, 40.2) pour déplacer la face arrière du corps de guidage de l'air (30) / de la plaque de guidage de l'air par rapport à la face avant fixe du corps de guidage de l'air (30) / de la plaque de guidage de l'air, ou inversement, sachant que
- lesdits moyens (40.1, 40.2) de déplacement sont sollicités par les moyens (16) pour régler la direction, si bien que l'on obtient une position souhaitée des évidements traversants (32) et ainsi la direction d'entrée d'air (R) souhaitée,
- et une plaque mobile (38) reliée au corps de guidage de l'air (30) ou à la plaque de guidage de l'air et dotée d'évidements (34) qui coïncident avec les évidements traversants (32), sachant que
- les moyens (40.1, 40.2) de déplacement présentent un premier mécanisme de déplacement (40.1) et un second mécanisme de déplacement (40.2) qui agissent sur la plaque mobile (38) et qui permettent de régler la direction de sortie (R) dans l'espace,
**caractérisé en ce que**
- la plaque mobile (38) est reliée au boîtier (26) en au moins trois endroits par des leviers (42) montés de part et d'autre sur des rotules, et
- des unités en saillie (54 ; 56) sont reliées à la plaque mobile (38), à l'extrémité libre desquelles sont chaque fois reliés de manière articulée des éléments de levier (46.1 ; 46.2) respectivement des premier et second mécanismes de déplacement (40.1 ; 40.2).

2. Dispositif d'acheminement d'air selon la revendication 1, **caractérisé en ce que** les moyens (40.1 ; 40.2) de déplacement gèrent deux directions de déplacement (H, V) perpendiculaires entre elles.

3. Dispositif d'acheminement d'air selon la revendication 1 ou 2, **caractérisé en ce que** les premier et second mécanismes de déplacement (40.1, 40.2) présentent chacun un arbre (44.1, 44.2) pouvant être entraîné en rotation auquel est chacune fois relié de manière articulée respectivement un élément de levier (46.1) relié de façon excentrique et une paire d'éléments de levier (46.2) reliée de façon excentrique, ou inversement, qui transforme la rotation de chaque arbre (44.1, 44.2) en mouvement de translation correspondant (H, V) de la plaque mobile (38).

4. Dispositif d'acheminement d'air selon la revendication 3, **caractérisé en ce que** les moyens (16) pour régler la direction (R) présentent des arbres (48.1, 48.2) pouvant être entraînés qui transmettent leur mouvement rotatoire résultant du réglage ayant été opéré à l'arbre rotatif correspondant (44.1, 44.2) au moyen de courroies dentées (50.1, 50.2) et, éventuellement, au moyen d'autres arbres et courroies intercalés.

5. Dispositif d'acheminement d'air selon la revendication 4, **caractérisé en ce que** les moyens (16) pour régler la direction présentent une boule de commande (16.1).

6. Dispositif d'acheminement d'air selon la revendication 14, **caractérisé en ce que** les moyens pour régler la direction présentent au moins un groupe pouvant être commandé et fonctionnant par voie électrique, hydraulique ou pneumatique.

7. Dispositif d'acheminement d'air selon l'une ou plusieurs des revendications précédentes, **caractérisé en ce que** les évidements traversants (32) sont disposés parallèlement entre eux au moins dans certaines zones.

8. Dispositif d'acheminement d'air selon l'une ou plusieurs des revendications précédentes, **caractérisé en ce qu'**au moins dans certaines zones, les évidements traversants sont disposés les uns par rapport aux autres selon un certain angle (W1 à W4).

9. Dispositif d'acheminement d'air selon l'une ou plusieurs des revendications précédentes, **caractérisé en ce que** les évidements traversants présentent une section transversale ronde, polygonale ou ovale.

10. Dispositif d'acheminement d'air selon l'une ou plusieurs des revendications précédentes, **caractérisé en ce que** le devant du corps de guidage de l'air (31) est réalisé en trois dimensions, et présente notamment une courbure convexe.

11. Dispositif d'acheminement d'air selon l'une ou plusieurs des revendications précédentes, **caractérisé en ce que** sur le devant du corps de guidage de l'air est placé un panneau perforé (24).

12. Dispositif d'acheminement d'air selon l'une ou plusieurs des revendications précédentes, **caractérisé en ce que** les moyens (40.1, 40.2) pour déplacer la plaque mobile (38) sont sollicités par une commande de climatisation.

13. Dispositif d'acheminement d'air selon la revendication 11, **caractérisé en ce que** le panneau perforé est constitué d'une matière noble décorative, notamment d'aluminium, d'inox, d'un placage de bois, d'un revêtement en cuir ou de Kevlar ®.
